Europäisches Patentamt

European Patent Office

Office européen des brevets

(19)

(11) Veröffentlichungsnummer : **0 152 909**
**B1**

(12)

# EUROPÄISCHE PATENTSCHRIFT

(45) Veröffentlichungstag der Patentschrift :
07.03.90

(21) Anmeldenummer : 85101564.4

(22) Anmeldetag : 13.02.85

(51) Int. Cl.⁵ : **B 60 R 22/38**

(54) **Vorrichtung zum selbsttätigen Aufrollen eines Fahrzeugsicherheitsgurtes.**

(30) Priorität : 21.02.84 DE 8405545 U

(43) Veröffentlichungstag der Anmeldung :
28.08.85 Patentblatt 85/35

(45) Bekanntmachung des Hinweises auf die Patenterteilung : 07.03.90 Patentblatt 90/10

(84) Benannte Vertragsstaaten :
DE FR GB IT SE

(56) Entgegenhaltungen :
DE--A-- 3 043 014
DE--A-- 3 303 209
FR--A-- 2 390 970
GB--A-- 2 064 943

(73) Patentinhaber : AUTOLIV GmbH
Otto-Hahn-Strasse 4
D-2200 Elmshorn (DE)

(72) Erfinder : Essler, Karl Hermann
Koppeldamm 20
D-2082 Tornesch (DE)

(74) Vertreter : Richter, Joachim, Dipl.-Ing.
Patentanwälte Richter u.Werdermann Neuer Wall 10
D-2000 Hamburg 36 (DE)

EP 0 152 909 B1

## Beschreibung

Die Erfindung betrifft eine Vorrichtung zum selbsttätigen Aufrollen eines Fahrzeugsichheitsgurtes, bestehend aus einem Gehäuse aus einem U-förmigen Rahmen mit in dessen Rahmenseitenplatten ausgebildeten Durchbrechungen für eine drehbar in diesen gehaltene Gurtwelle zum Aufwickeln des ausziehbaren Gurtes, die einendseitig oder beidendseitig je ein mit der Gurtwelle zusammenwirkendes, innerhalb der von der Außenwandfläche und der Innenwandfläche der Rahmenseitenplatte gebildeten Ebene und in der Durchbrechung liegendes Klinkenrad trägt, dessen Außenverzahnung mit einer an die das Klinkenrad aufnehmenden Durchbrechung sich anschließenden Durchbrechung liegenden Sperrklinke bei auf den Gurt einwirkendem Zug in Eingriff bringbar ist, wobei in der sich an die Klinkenraddurchbrechung anschließenden Durchbrechung die einendig um eine mit der Gurtwelle parallele Achse verschwenkbare und mit Spiel in der Durchbrechung gehaltene Sperrklinke liegend ist.

Eine solche Vorrichtung zum selbsttätigen Aufrollen eines Fahrzeugsicherheitsgurtes ist durch die im Oberbegriff des Anspruches 1 berücksichtigte DE-A-30 43 014 bekannt, die einen Aufrollautomaten für einen Sicherheitsgurt in Fahrzeugen mit einer Einrichtung zur Gurtspulenblockierung im Gefahrenfall, bestehend aus einer Klinkensperreinrichtung, die durch einen fahrzeugintensiven und/oder einen gurtbandsensitiven Auslösemechanismus selbsttätig betätigbar ist, beschreibt. Bei diesem Aufrollautomaten ist eine mit einer Sperrverzahnung der Gurtwelle verrastbare Sperrklinke vorgesehen, zu deren Betätigung ein auf der Gurtwelle frei drehbar gelagerter Steuerteil dient, mit dem ein mit der Gurtwelle drehfest verbundener, eine Rastverzahnung aufweisender Lagerteil durch Eingriff einer am Steuerteil gelagerten und durch einen fahrzeugsensitiven Massesensor direkt verstellbaren Sensorklinke und-/oder durch einen am Lagerteil gelagerten und mit dem Steuerteil verrastbaren gurtbandsensitiven Massesensor zu seiner Verstellung in die Sperrstellung kuppelbar ist.

Bei diesem Aufrollautomaten sind in den Seitenplatten des U-förmigen Automatengehäuses tangential zu den die Sperräder der Gurtwelle aufnehmenden Ausnehmungen verlaufende keilförmige Schlitze vorgesehen, in denen die U-förmige Sperrklinke mit Lagerschultern um ein vorbestimmtes Winkelmaß schwenkbar gelagert ist, wobei das Winkelmaß so bemessen ist, daß die U-förmige Sperrklinke mit dem Hochschwenken mit Sperrzähnen in den Außen-Sperrverzahnungen der Sperräder verrastet, dagegen in der unteren Ruhestellung die Sperräder freigibt. Die Sperrklinke selbst weist an ihren dem Schwenklager abgekehrten freien Enden keine gesondert ausgebildete Eingriffzahnung für den Eingriff in das Klinkenrad auf und darüber hinaus ist bei einem Eingriff der Sperrklinke in die Sperrzähne der Außenverzahnungen der Sperräder keine Kraftflußüberleitung von der Gurtwelle in das Automatengehäuse gegeben, da in der Eingriffstellung die Sperrklinke eine angehobene Stellung aufweist und in dieser Stellung mit ihren, dem Schwenklager abgekehrten freien Enden sich an keiner Gegenfläche an der Randbegrenzung der die Sperrklinke aufnehmenden Durchbrechung abstützt, so daß die Gurtwelle erheblichen Zugbelastungen durch den Gurt ausgesetzt und somit nicht gegen ein axiales Verschieben in dem sie aufnehmenden Rahmen ausreichend gesichert ist, was zur Folge hat, daß die Sperrklinke nicht immer sicher genug in die Außenverzahnung der Klinkenräder eingreift, um in der Eingriffstellung zu verbleiben. Hinzu kommt noch, daß bei einer Zugbelastung durch den Gurt die damit auftretenden Kräfte vom Schwenklager der Sperrklinke aufgenommen werden, wodurch keine ausreichende Sicherheit für das Einrasten der Sperrklinke in die Außenverzahnung des Klinkenrades gegeben ist. Das Automatengehäuse kann die auf die Sperrklinke einwirkenden Kräfte bei einer Zugeinwirkung auf den Gurt nicht aufnehmen und aufgrund des relativ langen Kraftweges können sich Knickprobleme in Bezug auf die Sperrklinke ergeben. Die auf die Sperrklinke einwirkenden Kräfte werden über das Schwenklager der Gurtwelle in das Gehäuse geleitet, wodurch das Lager für die Sperrklinke nicht kraftfrei gehalten werden kann.

Durch die FR-A-2 390 970 ist eine Vorrichtung zum selbsttätigen Aufrollen eines Fahrzeugsicherheitsgurtes bekannt, bei der ein Klinkenrad in einer Durchbrechung des Rahmens liegend ist. In einer an diese Klinkenraddurchbrechung anschließenden Durchbrechung ist ein in Längsrichtung verschiebbarer Sperrbolzen geführt. Bei einer Blockierung wird dieser Sperrbolzen nach oben zum Eingriff mit dem Klinkenrad geführt. Der Sperrbolzen kommt dann in seiner obersten Endstellung zum Anschlag gegen eine Gegenfläche, so daß ein Kraftfluß von der Gurtwelle in das Gehäuse bzw. dessen Rahmen leitbar ist. Die Überführung des Sperrbolzens in die Eingriffstellung mit dem Klinkenrad erfolgt vermittels einer gesonderten Einrichtung, über die der Sperrbolzen so weit in seiner Durchbrechung bzw. Führung angehoben ist, daß ein Eingriff in die Zähne des Klinkenrades möglich ist. Erst nach erfolgtem Eingriff wird der Sperrbolzen durch Mitnahme durch das Klinkenrad in seine Endstellung bewegt, in der der Sperrbolzen zur Anlage an einer die Durchbrechung für den Sperrbolzen begrenzenden Fläche zur Anlage kommt. Bei dieser Aufrollvorrichtung ist der Sperrbolzen in seiner Durchbrechung in keiner Weise reibungsarm gelagert, was darauf zurückzuführen ist, daß der Sperrbolzen mit seinen Außenwandflächen an den den Sperrbolzen aufnehmenden Durchbrechung begrenzenden Wandflächen anliegt und zwischen diesen Wandflächen ohne Spiel gehalten ist, da eine Verkanten vermieden werden muß. Auf diese Weise sind hohe Reibungskräfte gegeben, die schon bei der geringsten Verschmutzung wesentlich sich erhöhen, so daß ein Eingriff des Sperrbolzens in die Zähne des Klinkenrades immer dann nicht gewährleistet ist, wenn die Kräfte der den Sperrbolzen anhebenden Einrichtung nicht ausreichen. Hinzu kommt, daß der Sperrbolzen aufgrund der gegebenen großen Anlageflächen einem hohen Materialverschleiß ausgesetzt ist, so daß seitliche Freiräume im Laufe der Zeit ausgebildet werden, die zu einem seitlichen Spiel des Sperrbolzens zwischen seinen Führungen führen, wodurch der Eingriff des Sperrbolzens in die Zähne der Außenverzahnung des Klinkenrades nicht immer gewährleistet ist. Außerdem ist eine Ableitung der auf die Gurtwelle einwirkenden Kräfte bei auf den Gurt einwirkendem Zug in das Gehäuse nur dann möglich, wenn der Sperrbolzen in die Außenverzahnung des Klinkenrades eingerastet und seine Endstellung erreicht hat. Eine Kraftableitung während des Beginns des der Einrastphase von der Gurtwelle über den Sperrbolzen in das Gehäuse ist nicht möglich, da nur in der Endstellung der Sperrbolzen an der Randbegrenzung der den Sperrbolzen aufnehmenden Durchbrechung zur Anlage gebracht ist. Außerdem ist der Sperrbolzen nur mit einem einzigen Eingriffzahn versehen und greift nicht von oben in die Zähne der Außenverzahnung des Klinkenrades ein.

Durch die DE-A-24 35 050 ist ein Gurtaufroller für Fahrzeugsicherheitsgurte mit einer drehbaren Welle zum Aufwickeln des ausziehbaren Gurtes, sowie mit einer Blockiervorrichtung gegen ein weiteres Ausziehen des Gurtes, mit mindestens einem Blockierkörper, der beim Überschreiten einer bestimmten Winkelbeschleunigung der Welle und/oder Beschleunigung des Fahrzeuges in eine Blockierstellung in Kontakt mit einem gehäusefesten Gegenkörper bewegbar ist, bekannt. Die Blockiervorrichtung ist bei diesem Gurtaufroller als Gesperre mit zähne aufweisenden Sperrkörpern ausgebildet. Zum Anlegen des Gurtbandes kann dieses entgegen einer Aufrollfeder von der Wickelrolle abgezogen werden, wobei die Feder einen Zug auf den Gurt ausübt, damit dieser nicht am Körper anliebt. Bei einem Unfall wird die Welle des Aufrollers gesperrt, damit der Gurt zu diesem Zeitpunkt nicht herausgezogen werden kann. Hinzu kommt, daß bei diesem Gurtaufroller die Klinkenräder innerhalb der Seitenplatten des als Rahmen ausgebildeten Gehäuses der Gurtaufrollvorrichtung angeordnet sind. Diese Anordnung ermöglicht jedoch keine ausreichende Aufnahme von Abstützkräften durch das Gehäuse bzw. den Rahmen der Gurtaufrollvorrichtung selbst.

Die Erfindung löst die Aufgabe, ein Sperrsystem für die Gurtwelle zu schaffen, bei dem die bei Einwirkung eines Zuges auf den Gurt einwirkenden Kräfte bei in die Außenverzahnung des Klinkenrades eingreifender Sperrklinke in den die Gurtwelle aufnehmenden Rahmen abgeleitet und von diesem aufgenommen werden und mit dem eine erhöhte Einrastsicherheit der Sperrklinke in die Außenverzahnung des Klinkenrades gewährleistet ist.

Diese Aufgabe wird durch die im Patentanspruch 1 gekennzeichneten Merkmale gelöst.

Aufgrund einer derart ausgebildeten Ausgestaltung der Sperrklinke mit einer Kraftflußüberleitfläche, die mit einer Gegenfläche im Bereich der Durchbrechung, in der die Sperrklinke schwenkbar gelagert ist, zusammenwirkt, ist es möglich, die Sperrklinke in der Durchbrechung in den Seitenplatten des rahmenartig ausgebildeten Gehäuses vor dem Einrasten reibungsarm und mit Spiel zu lagern. Wirkt die Last bei Zugeinwirkung auf den Gurt ein, dann reduziert sich das Spiel zu Null, so daß sich die Sperrklinke mit ihrem freien Ende an der Seitenplatte des Rahmens des Gehäuses abstützt, so daß das Gehäuse selbst die auf die Sperrklinke einwirkenden Kräfte aufnimmt. Der Kraftweg wird daher sehr kurz und es können keine Knickprobleme in Bezug auf die Sperrklinke selbst eintreten. Ein Ableiten der auf die Sperrklinke einwirkenden Kräfte über deren Schwenklager in das Gehäuse wird auf diese Weise vermieden. Das Lager für die Sperrklinke wird dabei kraftfrei gehalten. Bei Belastung wird dagegen die Einrastsicherheit erhöht, denn die Einrastung der Sperrklinke in die Außenverzahnung des Klinkenrades wird dadurch verstärkt, daß das Klinkenrad sich in die Zähne der Sperrklinke dreht, wodurch eine selbstverstärkende Wirkung eintritt, wenn auf den Gurt Zugkräfte einwirken.

Vorteilhafte Ausgestaltungen der Erfindung sind in den Unteransprüchen gekennzeichnet.

Im folgenden wird der Gegenstand der Erfindung in den Zeichnungen erläutert. Es zeigt

Fig. 1 in einer schaubildlichen Ansicht das Gehäuse einer Sicherheitsgurtaufrollvorrichtung mit der Gurtwelle und der aus Klinkenrädern und Sperrklinken bestehenden Blockiereinrichtung,

Fig. 2 in einer Seitenansicht das Gehäuse vor der Einraststellung der Sperrklinke in die Außenverzahnung des Klinkenrades der Gurtwelle,

Fig. 3 in einer Seitenansicht das Gehäuse mit in die Außenverzahnung des Klinkenrades der Gurtwelle eingreifender Sperrklinke,

Fig. 4 eine Innenansicht auf eine Seitenplatte des Gehäuses bei abgenommener Gurtwelle mit einem Abstütz- und Sicherungselement für die Gurtwelle und

Fig. 5 eine Innenansicht auf die Ausführungsform gemäß Fig. 4 mit in die Durchbrechung in der Gehäuseseitenplatte eingesetzter Gurtwelle mit Klinkenrad.

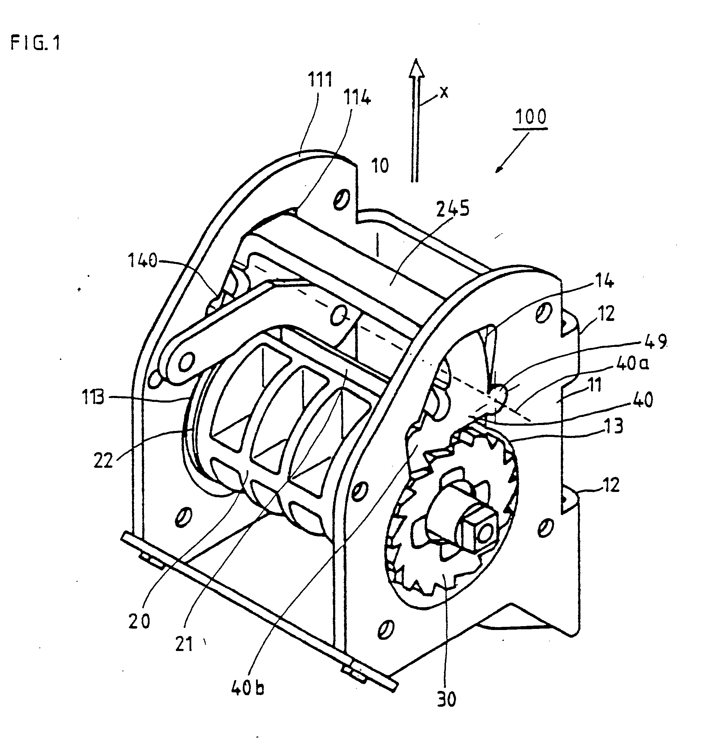

Gemäß Fig. 1 besteht die Sicherheitsgurtaufrollvorrichtung 100 aus einem Gehäuse 10 aus einem U-förmigen Rahmen mit den beiden Rahmenseitenplatten 11, 111, die über rückwärtige Stege 12 miteinander verbunden sind.

In jeder der beiden Rahmenseitenplatten 11, 111 ist eine Durchbrechung 13, 113 vorgesehen. An jede dieser Durchbrechungen 13, 113 in den Rahmenseitenplatten 11, 111 schließt sich eine Durchbrechung 14, 114 an, auf die nachstehend noch näher eingegangen wird.

In den Durchbrechungen 13, 113 des Gehäuses 10 ist eine Gurtwelle 20 gehalten, die in diesen Durchbrechungen drehbar gelagert ist und die in an sich bekannter Weise einen sich längs der Gurtachse erstreckenden, die Gurtwelle 20 radial durchziehenden Schlitz 21 aufweist, in welchem ein, z. B. aus Textilmaterial, bestehender und in der Zeichnung nicht dargestellter Sicherheitsgurt mit seinem freien Gurtende befestigt ist. Die Gurtabzugsrichtung ist in Fig. 1 durch den Pfeil X angedeutet.

Die beiden Rahmenseitenplatten 11, 111 sind mittels der Stege 12 als Distanzstück gegeneinander auf exakten Abstand gehalten. Weitere Elemente, wie Aufrollfeder u. dgl., sind in der Zeichnung nicht dargestellt.

Die Gurtwelle 20 trägt an ihren beiden Enden Klinkenräder, von denen in Fig. 1 nur ein Klinkenrad sichtbar dargestellt, welches mit 30 bezeichnet ist. Die auf den Enden der Gurtwelle 20 angeordneten Klinkenräder 30 sind auf die Gurtwelle 20 aufgesetzt, so daß die Klinkenräder mit der Gurtwelle in Wirkverbindung stehen. Die Anordnung der Klinkenräder 30 ist derart, daß diese in den Durchbrechungen 13, 113 in den beiden Rahmenseitenplatten 11, 111 zu liegen kommen. Die Klinkenräder 30 sind fest mit der Gurtwelle 20 verbunden.

Die Gurtwelle 20 kann ferner in ihren beiden Endbereichen Endscheiben 22 aufweisen, die vor den Klinenrädern 30 angeordnet sind, so daß diese Endscheiben 22 neben den Innenseitenwänden der Rahmenseitenplatten 11, 111 des Gehäuses 10 zu liegen kommen (Fig. 1). Anstelle von Endscheiben 22 kann die Gurtwelle 20 auch mit angeformten, umlaufenden Bünden versehen sein. Während die Endscheiben bzw. Bünde 22 der Gurtwelle 20 fest mit dieser verbunden sind, sind die auf der Gurtwelle 20 angeordneten Klinkenräder 30 auf den Gurtwellenendabschnitten gehalten, jedoch in der Weise, daß die Drehbarkeit der Gurtwelle 20 mittels der Klinkenräder 30 blockiert werden kann.

Oberhalb der Durchbrechungen 13, 113 für die Klinkenräder 30 schließen sich in den Rahmenseitenplatten 11, 111 Durchbrechungen 14, 114 an, die zur Aufnahme von Sperrklinken 40, 140 dienen, die über einen Bügel 245 miteinander verbunden sein können und die einendseitig in den bzw. an den Rahmenseitenplatten 11, 111 um waagerechte Achsen 40a verschwenkbar sind. Für das Verschwenken der Sperrklinken um die waagerechten Achsen 40a sind Schwenklager vorgesehen, die aus in den Rahmenseitenplatten 11, 111 im Bereich der Durchbrechung 14, 114 ausgebildeten teilkreisförmigen Ausnehmungen 14a bestehen, in die entsprechend geformte Gegenstücke 49 eingreifen, die an den Enden der Sperrklinken 40, 140 angeformt sind (Fig. 1, 2 und 3).

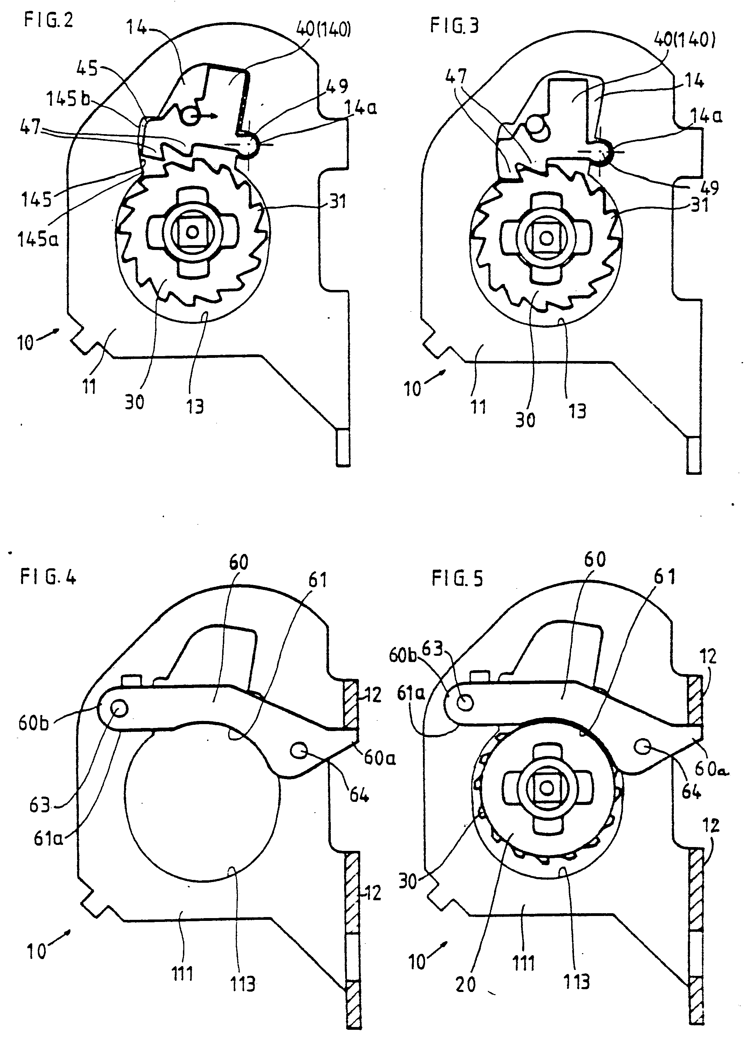

Die freien vorderen Enden 40b der Sperrklinken 40, 140 weisen Eingriffzähne 47 auf, um einen Eingriff der Sperrklinken 40, 140 in die Außenverzahnung 31 der Klinkenräder 30 zu bewirken, wenn die Blockierfunktion gegeben ist (Fig. 3).

Jede Sperrklinke 40, 140 weist an ihrem vorderen freien Ende 40b eine als Radius um den Sperrklinkendrehpunkt geführte Kraftflußüberleitfläche 45 auf, die sich an einer Gegenfläche 145 der Durchbrechung 14, 114 abstützt, wenn die Sperrklinke 40, 140 mit ihren Eingriffzähnen 47 in die Außenverzahnung 31 des Klinkenrades 30 eingreift (Fig. 3).

Diese Gegenfläche 145 ist so ausgestaltet bzw. so zum Schwenkbereich des vorderen Endes 40b der Sperrklinke 40, 140 verlaufend ausgebildet, daß nur in der Einraststellung der Sperrklinke 40, 140 in die Außenverzahnung 31 des Klinkenrades 30 die Kraftflußüberleitfläche 45 der Sperrklinke 40, 140 sich an der Gegenfläche 145 abstützt (Fig. 3), während in derjenigen Stellung, in der die Sperrklinke 40, 140 nicht in die Außenverzahnung 31 des Klinkenrades eingreift, die Sperrklinke 40, 140 frei beweglich ist, d. h. ihre Kraftflußüberleitfläche 45 ist dann mit Spiel zur Gegenfläche 145 angeordnet (Fig. 2). Im ausgesteuerten Zustand drückt der Zapfen des Einsteuermechanismus die Sperrklinke in das Klinkenlager. Hierdurch entsteht das Spiel zwischen Sperrklinke und Gehäuse. Das Spiel ergibt sich durch das Spiel im Sperrklinkenlager 14a und aus dem Druck des Betätigungsstiftes des Einsteuermechanismus im ausgesteuerten Zustand. Sowohl die Kraftflußüberleitfläche 45 an der Sperrklinke 40, 140 als auch die Gegenfläche 145 der Durchbrechung 14, 114 im Bereich der Materialstärke der Sperrklinke 40, 140 bzw. der Rahmenseitenplatten 11, 111 gebildet. Eine Verbreiterung der Gegenfläche 145 und der Kraftflußüberleitfläche 45 gegenüber der Wandstärke der Sperrklinke 40, 140 bzw. der Rahmenseitenplatten 11, 111 ist möglich.

Die Sicherheitsgurtaufrollvorrichtung 100 kann nur eine einzige Sperrklinke aufweisen, die dann mit der Außenverzahnung eines auf der Gurtwelle 20 angeordneten Klinkenrades zusammenwirkt. Vorteilhafterweise sind jedoch auf der Gurtwelle 20 zwei Klinkenräder 30 angeordnet, die in den Durchbrechungen 13, 113 in den Rahmenseitenplatten 11, 111 des Gehäuses 10 liegend sind. Die Sperrklinke 40 ist entsprechend der Sperrklinke 140 ausgebildet. Die Wirkungsweisen beider Sperrklinken 40, 140 sind die gleichen.

Bei der in Fig. 2 gezeigten Stellung der Sperrklinke 40 greifen deren Zähne noch nicht in die Außenverzahnung 31 des Klinkenrades 30. Erst bei einer Gurtbelastung erfolgt das Blockieren der Gurtwelle 20, indem die Sperrklinke 40 mit ihren Zähnen 47 in die Außenverzahnung 31 des Klinkenrades 30 eingreift (Fig. 3). In dieser Stellung stützt sich die Sperrklinke 40 mit ihrem vorderen, die Kraftflußüberleitfläche 45 aufweisenden Ende 40b an der Gegenfläche 145 der Durchbrechung 114 ab.

Um die Gurtwelle 20 gegen axiales Verschieben zu sichern und um bei einer Gurtbelastung den Kraftfluß von der Gurtwelle in das Gehäuse 10 bzw. dessen Rahmen leiten zu können, ist an der Innenwandfläche einer der beiden Rahmenseitenplatten 11, 111 des Gehäuses 10 ein stabförmig oder plattenförmig ausgebildetes Abstütz- und Sicherungselement 60 angeordnet, wobei auch die Möglichkeit besteht, an den Innenwandflächen der beiden Rahmenseitenplatten je ein derartiges Abstütz- und Sicherungselement 60 anzuordnen. Die Anordnung des Abstütz- und Sicherungselementes 60 ist dabei derart, daß sich die Gurtwelle 20 bzw. die an der Gurtwelle 20 vorgesehenen Endscheiben oder umlaufenden Bünde 22 an der Unterkante 61a eines jeden Abstütz- und Sicherungselementes 60 abstützen (Fig. 5). Vorzugsweise weist dabei das Abstütz- und Sicherungselement 60 an seinem der Gurtwelle 20 bzw. deren Endscheiben, Bünde od. dgl. 22 zugekehrten Bereich eine kreisbogenförmige Ausnehmung 61 auf, die einem Kreisdurchmesser entspricht, der in etwa dem Durchmesser der Gurtwelle 20 bzw. deren Endscheiben, Bünde od. dgl. 22 entspricht.

Das Abstütz- und Sicherungselement 60 ist bei 63, 64 an der Innenwandfläche einer jeden der beiden Rahmenseitenplatten 11, 111 des Gehäuses 10 befestigt. Die Lange und Anordnung des Abstütz- und Sicherungselementes 60 ist derart, daß sich dieses Abstütz- und Sicherungselement 60 zumindest mit einem seiner beiden Enden an dem Gehäuse 10 bzw. dessen Rahmen selbst abstützt, wie dies aus Fig. 4 und 5 ersichtlich ist. Hier stützt sich das Abstütz- und Sicherungselement 60 mit seinem Ende 60a an bzw. unterhalb des Steges 12 ab, der die beiden Rahmenseitenplatten 11, 111 miteinander verbindet. Eine zusätzliche entsprechende Abstützung kann auch im Bereich des vorderen Endes 60b des Abstütz- und Sicherungselementes 60 erfolgen, wenn hier entsprechende Abstützflächen geschaffen sind.

Um die Gurtwelle 20 gegen ein axiales Verschieben zu sichern, weist die Gurtwelle 20 im Vergleich zum Durchmesser des Klinkenrades 30 bzw. der beiden Klinkenräder einen kleineren Durchmesser auf (Fig. 5). Dadurch, daß das Klinkenrad 30 gegenüber dem Durchmesser der Gurtwelle 20 einen größeren Durchmesser aufweist, liegt der umlaufende Rand des Klinkenrades 30 im Bereich des Abstütz- und Sicherungselementes 60 an, so daß die auf beiden Seiten des Gehäuses 10 vorgesehenen Abstütz- und Sicherungselemente 60 ein axiales Verschieben der Gurtwelle 20 verhindern. Weist dagegen die Gurtwelle 20 in ihrem Endbereich Endscheiben oder umlaufende Bünde 22 auf, so ist auch der Durchmesser dieser Endscheiben oder der Bünde 22 gegenüber dem Durchmesser der Klinkenräder 30 kleiner bemessen, so daß auch Gurtwellen 20 mit aufgesetzten Endscheiben oder angeformten Bünden 22 mittels der vorgesehenen Abstütz- und Sicherungselemente 60 gegen ein axiales Verschieben gesichert sind. Die Endscheiben bzw. Bünde 22 stützen sich in Abhängigkeit von der Gurtauszugsrichtung bei Gurtbelastung an den jeweiligen Kanten 61 der beiden Abstütz- und Sicherungselemente 60 an den Innenwandflächen der Rahmenseitenplatten 11, 111 ab.

Die Abstütz- und Sicherungselemente 60 sind bei dem in Fig. 4 und 5 gezeigten Ausführungsbeispiel an den Innenwandflächen der beiden Rahmenseitenplatten 11, 111 des Gehäuses 10 angeordnet. Bei einer entsprechenden Ausgestaltung der Gurtwelle 20 besteht jedoch auch die Möglichkeit, die beiden Abstütz- und Sicherungselemente 60 an den Außenwandflächen der Rahmenseitenplatten 11, 111 anzuordnen. Für diese Ausgestaltung ist die Gurtwelle 20 mit endseitigen Abschnitten aus den Klinkenrädern 30 herausgeführt. Die freien Enden der Gurtwelle 20 können dann ebenfalls Endscheiben tragen, deren Durchmesser im Vergleich zum Durchmesser der Klinkenräder 30 geringer ist und die sich dann an den Unterkanten der an den Außenwandflächen der Rahmenseitenplatten 11, 111 des Gehäuses 10 angebrachten Abstütz- und Sicherungselemente 60 abstützen.

Die Abstütz- und Sicherungselemente 60 sind mittels Niet-, Schweiß-, Kleb- oder Schraubverbindungen oder durch Clipsen, d. h. kraft- oder formschlüssig, an den Rahmenseitenplatten 11, 111 des Gehäuses befestigt. Die Abstütz- und Sicherungselemente 60 können jedoch auch integrierter Bestandteil der Rahmenseitenplatten 11, 111 insofern sein, als die Rahmenseitenplatten 11, 111 je nach Gurtauszugsrichtung, z. B. oberhalb der Gurtwelle 20 bzw. deren Endscheiben oder Bünde 22, ausgezogene Abschnitte aufweisen, d. h. entsprechende Abschnitte der Rahmenseitenplatten 11, 111 sind herausgekröpft, so daß eine Anlagekante 61 zum Abstützen der Gurtwelle 20 bzw. deren Endscheiben oder Bünde 22 erhalten wird. Diese Auskröpfungen können sowohl innenseitig als auch außenseitig an den Rahmenseitenplatten 11, 111 des Gehäuses 10 vorgesehen sein ; die Richtung der Auskröpfung, die dann das Abstütz- und Sicherungselement darstellt, wird sich jeweils danach richten, ob die Gurtwelle 20 sich im Innenraum des Gehäuses 10 oder außerhalb des Gehäuses an diesen Auskröpfungen bzw. den durch die Auskröpfungen gebildeten Abstütz- und Sicherungselementen abstützen soll.

Die Abmessungen der Sperrklinke sind klein gehalten, so daß auch die Masse bei beschleunigter Bewegung beim Einsteuern klein ist, so daß geringe Massenkräfte gegeben sind. Dadurch ist eine geringere Belastung der Kunststoffteile der Einsteuermechanik gegeben.

**Patentansprüche**

1. Vorrichtung zum selbsttätigen Aufrollen eines Fahrzeugsicherheitsgurtes, bestehend aus einem Gehäuse (10) aus einem U-förmigen Rahmen mit in dessen Rahmenseitenplatten (11, 111) ausgebildeten Durchbrechungen (13, 113) für eine drehbar in diesen gehaltene Gurtwelle (20) zum Aufwickeln des ausziehbaren Gurtes, die einendseitig oder beidendseitig je ein mit der Gurtwelle (20) zusammenwirkendes, innerhalb der von der Außenwandfläche und der Innenwandfläche der Rahmenseitenplatte (11 ; 111) gebildeten Ebene und in der Durchbrechung (13 ; 113) liegenden Klinkenrad (30) trägt, dessen Außenverzahnung (31) mit einer an die das Klinkenrad (30) aufnehmenden Durchbrechung (13 ; 113) sich anschließenden Durchbrechung (14 ; 114) liegenden Sperrklinke (40 ; 140) bei auf den Gurt einwirkendem Zug in Eingriff bringbar ist, wobei in der sich an die Klinkenraddurchbrechung (13 ; 113) anschließenden Durchbrechung (14 ; 114) die einendig mit einer mit der Gurtwelle (20) parallelen Achse (40a) verschwenkbare und mit Spiel in der Durchbrechung (14 ; 114) gehaltene Sperrklinke (40 ; 140) liegend ist, dadurch gekennzeichnet, daß das Schwenklager für das Verschwenken der Sperrklinke (40 ; 140) um ihre Achse (40a) aus einer in der Rahmenseitenplatte (11 ; 111) im Bereich der Durchbrechung (14 ; 114) ausgebildeten teilkreisförmigen Ausnehmung (14a) besteht, in der ein entsprechend geformtes Gegenstück (49) gehalten ist, das an dem Ende der Sperrklinke (40 ; 140) angeformt ist, und daß jede Sperrklinke (40 ; 140) an ihrem dem Schwenklager abgekehrten freien Ende (40b) eine als Radius um den Sperrklinkendrehpunkt ausgebildete Kraftflußüberleitfläche (45) aufweist, die sich an einer dem Verlauf der Kraftflußüberleitfläche (45) entsprechend ausgebildeten Gegenfläche (145) an der Randbegrenzung der Durchbrechung (14 ; 114) bei Einraststellung der Sperrklinke (40 ; 140) von oben in die Außenverzahnung (31) des Klinkenrades (30) abstützend ist und an der dem Klinkenrad (30) zugekehrten Seite Eingriffzähne (47) aufweist.

2. Vorrichtung nach Anspruch 1, dadurch gekennzeichnet, daß bei der Verwendung von zwei Sperrklinken (40, 140) beide Sperrklinken über einen Bügel (245) miteinander verbunden sind.

3. Vorrichtung nach Anspruch 1 und 2, dadurch gekennzeichnet, daß jede Sperrklinke (40 ; 140) als einseitig sperrendes oder als doppelseitig sperrendes Klinkenelement ausgebildet ist.

## Claims

1. Automatic retraction device for a vehicle safety belt, consisting of a casing (10) formed by a U-shaped frame with perforations (13, 113) constructed in its frame side plates (11, 111) for a belt shaft (20) rotatably retained in the same for retracting the extensible belt which, on one end or on both ends, bears one ratchet wheel each that interacts with the belt shaft (20) and is located within the plane formed by the outer wall surface and the inner wall surface of the frame side plate (11 ; 111) and inside the perforation (13 ; 113), the external toothing (31) of which can be brought into engagement with the detent (40 ; 140) by traction acting upon the belt and which is located disposed inside a perforation (14 ; 114) which follows the perforation (13 ; 113) that accommodates the ratchet wheel perforation (13 ; 113), which is located with a detent (40 ; 140) retained with play inside the perforation (14 ; 114) and which is swivellable at one end about a parallel axis (40a) together with the belt shaft (20), characterized in that the swivel bearing for swivelling the detent (40 ; 140) about its axis (40a) consists of a pitch circle-like recess (14a) constructed in the frame side plate (11 ; 111) within the area of the perforation 14 ; 114), in which an appropriately configured counterpart (49) is retained which is formed onto the end of the detent (40 ; 140), while at its free end (40b) facing away from the swivel bearing, it is provided with a flux of force conducting surface (45) constructed in the form of a radius around the detent point of rotation which is supported on a counter-surface (14b) configured in accordance with the course of the flux of force conduction surface on the marginal limit of the perforation (40 ; 140) from the top into the external toothing (31) of the ratchet wheel (30) and which is provided with engagement teeth (47) on the side which faces the ratchet wheel (30).

2. Device according to Claim 1, characterized in that, when two detents (40, 140) are employed, both detents are interconnected by means of a stirrup (245).

3. Device according to Claim 1 and Claim 2, characterized in that each detent (40 ; 140) is constructed in the form of a retchet member which arrests on one side or as a ratchet member that arrests on both sides.

## Revendications

1. Dispositif d'enroulement automatique pour une ceinture de sécurité de véhicule, constitué par un bâti (10) constitué par un cadre en forme de U avec des découpures (13, 113) ménagées dans les plaques latérales du cadre (11, 111) pour une broche pour ceinture (20) maintenue dans celui-ci pour l'enroulement de la ceinture extensible en étant pivotante, broche qui porte à l'une de ses extrémités ou à ses deux extrémités respectivement une roue à cliquet (30) qui coopère avec la broche pour ceinture (20) et qui se trouve à l'intérieur du plan formé par la face de la paroi extérieure et la face de la paroi intérieure de la plaque latérale du cadre (11 ; 111) et dans la découpure (13 ; 113), roue à cliquet dont la denture extérieure (31) peut être mise en prise avec un cliquet d'arrêt (40 ; 140) se trouvant sur la découpure (14 ; 114) suivant la découpure (13 ; 113) qui loge la roue à cliquet (30), lorsqu'une traction est effectuée sur la ceinture, le cliquet d'arrêt (40 ; 140), qui est pivotant à une extrémité avec un axe (40a) parallèle à la broche de la ceinture (20) et qui est maintenu dans la découpure (14 ; 114) avec du jeu, étant situé horizontalement dans la découpure (14 ; 114) qui suit la découpure de la roue à cliquet (13 ; 113), caractérisé en ce que l'appui pivotant pour le pivotement du cliquet d'arrêt (40 ; 140) autour de son axe (40a) est constitué par un évidement (14a) en forme de cercle partiel ménagé dans la plaque latérale de cadre (11 ; 111) dans la zone de la découpure (14 ; 114), dans lequel est maintenu un pendant (49) formé de manière correspondante qui est moulé à l'extrémité du cliquet d'arrêt (40 ; 140), et que chaque cliquet d'arrêt (40 ; 140) présente, à son extrémité libre (40b), qui est détournée de l'appui pivotant, une surface de transmission de flux de force (45) configurée comme un rayon autour du point d'appui du cliquet d'arrêt qui s'appuie sur une contre-surface (145) configurée en correspondant à l'allure de la surface de transmission sur la délimitation marginale de la découpure (14 ; 114), lorsque le cliquet d'arrêt (40 ; 140) est en position encliquetée de par le haut dans la denture extérieure (31) de la roue à cliquet (30) et qui présente des dents d'engrènement (47) sur le côté tourné vers la roue à cliquet (30).

2. Dispositif selon la revendication 1, caractérisé en ce que, lors de l'utilisation de deux cliquets d'arrêt (40, 140), les deux cliquets d'arrêt sont reliés l'un à l'autre par une traverse (245).

3. Dispositif selon les revendications 1 et 2, caractérisé en ce que chaque cliquet d'arrêt (40 ; 140) est configuré comme un élément à cliquet à blocage d'un côté ou des deux côtés.

FIG.1

FIG.2

FIG.3

FIG.4

FIG.5